# EUROPÄISCHE PATENTSCHRIFT

(11) **EP 3 097 623 B1**
(45) Veröffentlichungstag und Bekanntmachung des Hinweises auf die Patenterteilung: **27.06.2018**
(21) Anmeldenummer: 15700386.4
(22) Anmeldetag: 14.01.2015
(51) Int. Cl.: H02J 3/38, H02J 3/46, F03D 7/04, F03D 9/25

(54) **WINDPARK MIT VORSTEUERUNG IM LEISTUNGSREGLER**
POWER CONTROL WITH FEEDFORWARD FOR WIND PARK
RÉGULATEUR DE PUISSANCE AVEC PRÉCOMMANDE POUR PARC ÈOLIEN

(30) Priorität: 22.01.2014 DE 102014000784
(43) Veröffentlichungstag der Anmeldung: 30.11.2016
(73) Patentinhaber: Senvion GmbH, 22297 Hamburg (DE)
(72) Erfinder: GEISLER, Jens, 24768 Rendsburg (DE); BLUHM, Roman, 22844 Norderstedt (DE); OTT, Thomas, 24784 Westerrönfeld (DE); SCHRÖTER, Thomas, 21073 Hamburg (DE)
(74) Vertreter: Glawe, Delfs, Moll
(86) Internationale Anmeldenummer: PCT/EP2015/050608
(87) Internationale Veröffentlichungsnummer: WO 2015/110335

(56) Entgegenhaltungen:
- WO-A1-2006/066797

## Beschreibung

Die Erfindung betrifft einen Windpark mit mindestens zwei Windenergieanlagen, die mittels eines Windrotors und eines Generators elektrische Leistung erzeugen und an ein Sammelnetz abgeben, und einem Parkmaster, der zur Führung der Windenergieanlagen ausgebildet ist, wobei der Parkmaster einen Leistungsregler umfasst, an dessen Eingang ein Sollleistungssignal angelegt ist und an dessen Ausgang Leistungssteuersignale für die Windenergieanlagen ausgegeben werden

Durch umfangreichen Zubau von Windenergieanlagen und Windparks spielen diese eine immer größere Rolle bei der Leistungserzeugung im elektrischen Netz. Seitens der Netzbetreiber wird daher verlangt, dass auch Windparks aktiv an der Regelung im Netz beteiligt werden. Das betrifft u. a. die Bereitstellung von Blindleistung aber auch Maßnahmen zur Kontrolle der abgegebenen Wirkleistung. Windparks unterscheiden sich von herkömmlichen Kraftwerken jedoch in einem wesentlichen Punkt, nämlich dass die von ihnen abgegebene Leistung nicht frei bestimmt werden kann, sondern dass sie abhängig ist von der Windgeschwindigkeit im allgemeinen und den Windverhältnissen an den einzelnen Windenergieanlagen des Windparks im speziellen.

Grundsätzlich ist es so, dass an Windparks nunmehr eine Sollvorgabe für die abzugebende Leistung übermittelt wird.

Es ist klar, dass die Windparks bei einem Anstieg der Leistungsanforderung ggf. je nach Windverhältnissen nur bedingt folgen können. Sie können aber bei einem Abfall der Leistungsanforderung stets reagieren, nämlich indem die Windenergieanlage des Windparks gedrosselt wird und sie somit den vorhandenen Wind nicht voll ausnutzen. In dieser Richtung, also bei Sollwertverstellungen für die Leistung nach unten, sind Windparks im Grundsatz also voll zur Netz-Regelung heranziehbar.

Dies wird genutzt, indem an dem Parkmaster ein Sollwert für eine abzugebende Leistung angelegt ist. Der Parkmaster steuert die Windenergieanlage so an, dass eine entsprechende Leistung erzeugt und in das Netz abgegeben wird, soweit das die Windverhältnisse zulassen. Lassen sie es nicht zu, so wird zwar der Sollwert nicht erreicht aber der Windpark speist soviel Leistung wie aktuell möglich ein.

Verlangt der Netzbetreiber nun eine Reduzierung der Leistungsabgabe, so wird der Sollwert an den Parkmaster entsprechend gesenkt. Dies erfolgt in der Regel zur Vermeidung von Über- oder Unterschwingern bei der Leistungsabgabe nicht schlagartig, sondern allmählich als Rampe. Das rampenförmige Reduzieren des Sollwerts trägt auch der Tatsache Rechnung, dass entsprechende Drosselsignale an die verteilt im Windpark angeordneten WEA erst übermittelt werden müssen und diese jeweils für sich ihre Rotorblätter bezüglich des Anstellwinkels verstellen müssen, um die gewünschte Leistungsreduzierung durchzuführen.

Bei schwachen Windverhältnissen trifft häufig der Fall auf, dass die tatsächlich abgegebene Leistung kleiner ist als der Sollwert, also der Sollwert recht hoch ist. Diese Diskrepanz ist bei einem Windpark unvermeidlich und an sich nicht problematisch. In der Praxis kommt es aber dann zu Schwierigkeiten, wenn dann der Sollwert ausgehend von seinem recht hohen Wert deutlich abgesenkt wird. Wegen der Diskrepanz zur viel niedrigeren tatsächlichen Leistungsabgabe wirkt sich die rampenartige Absenkung des Sollwerts anfänglich überhaupt nicht aus, da der Sollwert immer noch über dem Istwert liegt. Erst wenn der Sollwert soweit abgesunken ist, dass er den Istwert erreicht und dann weiter sinkt, wird dann die Leistungsabgabe des Windparks tatsächlich reduziert. Der Windpark reagiert auf die angeforderte Leistungsverringerung also verzögert. Es besteht eine unerwünschte Totzeit. Dies ist aus Sicht des Netzbetreibers ungünstig. Noch ungünstiger für den Netzbetreiben ist jedoch, dass die Länge der Totzeit nicht fix ist, sondern umso länger wird, je größer anfänglich die Diskrepanz zwischen Sollwert und geringerer tatsächlicher Leistungsabgabe war. Unter Regelungsaspekten ist ein solches Verhalten nur schwer zu beherrschen und stellt eine Gefahr für die Systemstabilität des Netzes dar.

Die Patentanmeldung WO 2006/066797 A1 schlägt eine Lösung vor, die eine Regelung mit mehreren Kreisen vorsieht. Dadurch wird die Komplexität der Regelungsstruktur erhöht und die inneren bzw. äußeren Regelkreise müssen aufeinander abgestimmt werden (sie weisen verschiedene Zeitkonstanten und dementsprechend unterschiedliche Reaktionszeiten auf) um die gewünschte Dynamik und Stabilität zu erzielen. Der Erfindung liegt die Aufgabe zugrunde, einen verbesserten Windpark zu schaffen, der diese Nachteile vermeidet. Die erfindungsgemäße Lösung liegt in den Merkmalen der unabhängigen Ansprüche. Vorteilhafte Weiterbildungen sind Gegenstand der abhängigen Ansprüche.

Bei einem Windpark mit mindestens zwei Windenergieanlagen, die mittels eines Windrotors und eines Generators elektrische Leistung erzeugen und an ein Sammelnetz abgeben, und einem Parkmaster, der zur Führung der Windenergieanlagen ausgebildet ist, wobei der Parkmaster einen Leistungsregler umfasst, an dessen Eingang ein Sollleistungssignal angelegt ist und an dessen Ausgang Leistungssteuersignale für die Windenergieanlagen ausgegeben werden, ist erfindungsgemäß vorgesehen, dass der Leistungsregler ein Vorsteuermodul aufweist, das ein Maß für die Sollleistung über ein Multiplikationsglied auf den Ausgang des Leistungsreglers aufschaltet.

Ein wesentlicher Aspekt der Erfindung liegt darin, dass das Vorsteuermodul nicht additiv auf den Ausgang des Leistungsreglers aufgeschaltet wird, sondern multiplikativ. Damit kann ein deutlich beschleunigtes Ansprechverhalten insbesondere bei Sollwertreduktion erreicht werden. Es ist der Verdienst der Erfindung erkannt zu haben, dass eine herkömmliche Vorsteuerung nicht genügt, um das erwünschte verbesserte Verhalten, sondern dass es auf eine andere Art der Aufschaltung ankommt, nämlich per Multiplikationsglied. Sie bietet nicht nur den Vorteil des schnellern Ansprechverhaltens, sondern ist zusätzlich auch robust gegenüber dem Betriebszustand des Windparks, also ob viel oder wenig Leistung erzeugt wird. Durch die Multiplikation mit dem vom Leistungsregler ausgegebenen Leistungssignal wird eine automatische Anpassung des Vorsteuermoduls an das jeweilige Leistungsniveau erreicht. Mit einer nur additiven Verknüpfung, ist das nicht zu leisten. Die Erfindung vereint somit auf frappierend einfache und elegante Weise Vorzüge hinsichtlich schnellern Ansprechverhaltens mit Robustheit bezüglich des Betriebszustands des Windparks.

Über das Multiplikationsglied wirkt die Vorsteuerung sozusagen parallel mit dem Leistungsregler zusammen. Zweckmäßigerweise ist hierfür ein stationär genaues Glied vorgesehen, um einen gewünschten Leistungswert besser einregeln zu können. Solche stationär genauen Glieder, insbesondere in Gestalt eines I-Glieds, sind im Stand der Technik zwar an sich bekannt, aber nicht in der Kombination mit einem multiplikativ angeschalteten Vorsteuermodul.

Dank der Vorsteuermoduls und der damit bewirkten schnellen Reaktion aus Sollwertveränderungen, insbesondere Sollwertreduktionen, ist der Leistungsregler insoweit entlastet. Bei seiner Parametrierung braucht nicht mehr vorrangig auf schnelles Ansprechverhalten geachtet zu werden. Die Erfindung macht sich dies zu Nutze, indem sie vorzugsweise einen doppelten Parametersatz für den Leistungsregler vorsieht. Je nach Bedarf wird einer der Parametersätze genutzt, um den Leistungsregler zu parametrieren. Zweckmäßigerweise wird hierbei als Kriterium auf das Vorzeichen einer am Leistungsregler gebildeten Regeldifferenz abgestellt, mithin also positiv für Erhöhungen und negativ für Reduktionen. Je nach Vorzeichen wird dann einer der beiden Parametersätze für den Leistungsregler verwendet. Das Umschalten zwischen den Parametersätzen kann jederzeit, also dynamisch erfolgen. Als besonders vorteilhaft hat sich eine Konfiguration herausgestellt, bei welcher der Parametersatz für die Reduktion eine kürzere Zeitkonstante als der Parametersatz für die Erhöhung aufweist, und zwar um etwa eine Größenordnung. Unter "etwa eine Größenordnung" wird ein Faktor von ca. 8 bis 14 angesehen, vorzugsweise etwa 10. Damit wird eine besonders gute Anpassung an die Verhältnisse gerade von Windenergieanlagen erreicht. Diese können die Leistungsabgabe nicht oder nur recht langsam erhöhen, hingegen sind sie aber befähigt, die Leistungsabgabe rasch zu reduzieren. Diesem intrinsischen Verhalten der Windenergieanlage wird durch eine solche vorgeschlagen Reglerkonfiguration Rechnung getragen.

Um den hohen Anforderungen an die Stabilität des Netzes gerecht zu werden, ist zweckmäßigerweise vorgesehen, dass das Vorsteuermodul einen Korrekturbegrenzer aufweist. Damit wird die vom Vorsteuermodul bewirkte Änderung beschränkt, was sich vorteilhaft auf die Stabilität auswirkt. Gleichzeitig gestattet es, eher größere Verstärkungsfaktoren einzustellen, ohne dass deswegen die Gefahr einer Instabilität entstehen würde. Mit Vorteil ist der Korrekturbegrenzer asymmetrisch ausgeführt. Unter "asymmetrisch" wird hierbei verstanden, dass die untere Grenze einen anderen Abstand aufweist als die obere Grenze. Es hat sich für die Erfindung bewährt, die untere Grenze fix zu wählen und die obere Grenze variabel zu halten. Damit können die gegensätzlich erscheinenden Forderungen nach schnellem Ansprechverhalten einerseits und Stabilität im Betrieb andererseits auf zweckmäßige Weise verbunden werden.

Für die Generierung der oberen Grenze ist zweckmäßigerweise ein Maximumsfinder vorgesehen. Er ist dazu ausgebildet, aus den verschiedenen Windenergieanlagen des Windparks diejenige Windenergieanlage zu ermitteln, welche die maximale elektrische Leistung erzeugt und in das Netz einspeist. Diese maximale Leistung, genauer gesagt der dazugehörende auf die Nennleistung der Windenergieanlage normierte Leistungsgrad (z. B. 0,75 für eine zu 75 % ausgelastete Windenergieanlage) wird bei der Bildung der oberen Grenze des Korrekturbegrenzers zu Grunde gelegt, so dass das Risiko einer unerwünschten Abdrosselung wind- und damit leistungsstarker Windenergieanlagen vermieden wird. Vorzugsweise ist durch die Hinzufügung eines festen Werts sichergestellt, dass die obere Grenze stets größer ist als die untere Grenze.

Eine schnelle Reaktion der Leistungsregelung ist an sich erwünscht, wie eingangs beschrieben. Allerdings ist zu berücksichtigen, dass das geregelte System, die Windenergieanlagen, mechanische Komponenten aufweist, die nicht beliebig schnell reagieren, schon allein wegen ihrer trägen Masse. Würde eine zu hohe Änderungsgeschwindigkeit verlangt, so könnte die Windenergieanlage also gar nicht folgen. In der Folge entstünden Abweichungen, die als Regelabweichungen vom Leistungsregler erkannt würden und zu einer weiteren zusätzlichen Änderung an seinem Ausgang führen würde, der die Windenergieanlage aber ohnehin gar nicht mehr folgen kann. Ein solcher Zustand ist unerwünscht. Es ist daher zweckmäßig, der Vorsteuerung als an sich erwünschtes schnelles Reaktionsmittel ein Korrektiv gegenüberzustellen, welches die Änderungsgeschwindigkeit soweit begrenzt, dass sie noch für die Windenergieanlage verträglich ist. Dazu ist vorzugsweise ein Dynamiksperrglied vorgesehen, welches an den Ausgang des Multiplikationsglieds angeschlossen (also im Signalpfad hinter der Vorsteuerung, um auch deren Einfluss zu erfassen). Das Dynamiksperrglied ist dazu ausgebildet, die Änderungsrate an diesem Ausgang zu überwachen und bei Überschreiten eines Grenzwerts den Leistungsregler zu blockieren. Ein weiteres Anwachsen der Werte am Ausgang, die zu einer Überforderung der Windenergieanlage führen könnte, wird somit verhindert. Vorzugsweise geschieht das in der Weise, dass der Leistungsregler im blockierten Zustand den vorherigen Wert beibehält. Damit bleibt sein Zustand bestehen und es kann wieder weich eingesetzt werden, wenn das Dynamiksperrglied die Blockierung aufhebt.

Mit Vorteil ist in dem Dynamiksperrglied ein vorzugsweise vereinfachtes Modell der Windenergieanlage implementiert. Es kann so genauer auf das Verhalten der Windenergieanlage, insbesondere bei Änderungen der abgeforderten Leistung, abgestimmt sein. Das Modell braucht dazu nicht zwingend besonders aufwendig zu sein. Aus Gründen einer schnelleren Berechnung ist ein einfaches Modell sogar von Vorteil. Besonders zweckmäßig ist, wenn das vereinfachte Modell bimodal in dem Sinne ist, das es unterschiedliche Zeitkonstanten für Leistungsreduktion bzw. Leistungserhöhung vorsieht. In der Regel kann eine Windenergieanlage einer Leistungsreduktion schnell folgen, während für eine Leistungserhöhung wegen der dazu erforderlichen Verstellung des Windrotors sich eine Verzögerungszeit ergibt. Eine besonders einfache wie zweckmäßige Modellierung sieht deshalb für die Leistungserhöhung ein Verzögerungsglied vor, wobei eines erster Ordnung genügt. Damit wird ohne viel Aufwand ein deutlich besseres dynamisches Verhalten, vor allem auch bei hohen Änderungsraten, erreicht.

Die Erfindung erstreckt sich ferner auf ein entsprechendes Verfahren. Zur näheren Erläuterung wird auf vorstehende Beschreibung verwiesen.

Nachfolgend wird die Erfindung unter Bezugnahme auf die Zeichnung anhand eines vorteilhaften Ausführungsbeispiels näher erläutert. Es zeigen:
- Fig. 1: eine Übersichtsansicht eines Windparks mit einem Parkmaster und mehren Windenergieanlagen gemäß einem Ausführungsbeispiel der Erfindung;
- Fig. 2: eine Schemaansicht zu dem Parkmaster mit einer Vorsteuerung;
- Fig. 3: ein Blockdiagramm zu einem Leistungsregler des Parkmaster und der Vorsteuerung;

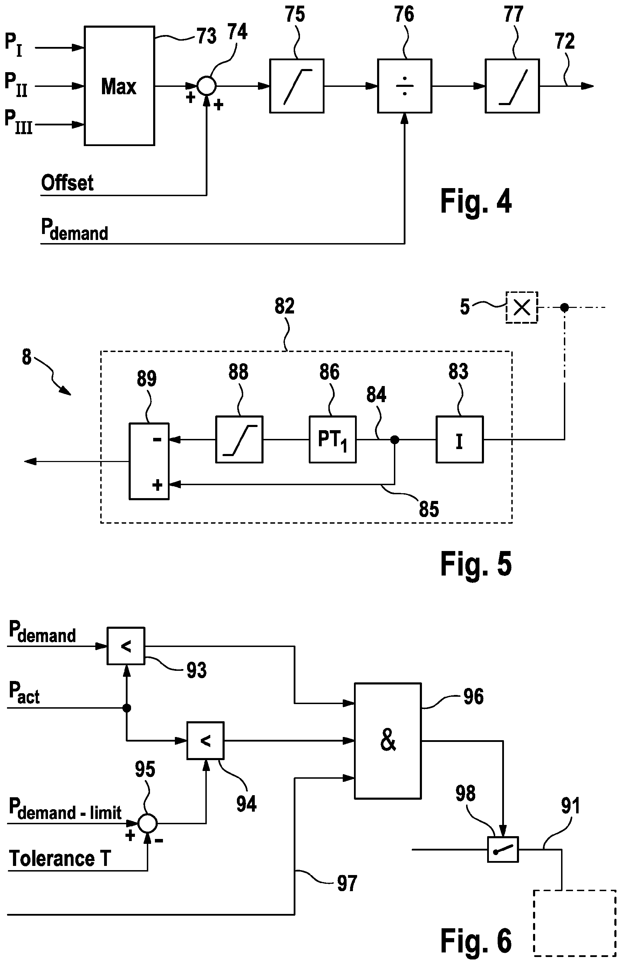

- Fig. 4: eine Detailansicht zu einem Korrekturbegrenzer;
- Fig. 5: eine Detailansicht zu einem Dynamiksperrglied;
- Fig. 6: eine Detailansicht zu einem Initialisierungsmodul; und
- Fig. 7: eine Vergleichsdarstellung zum Verhalten des Windparks mit und ohne die Erfindung.

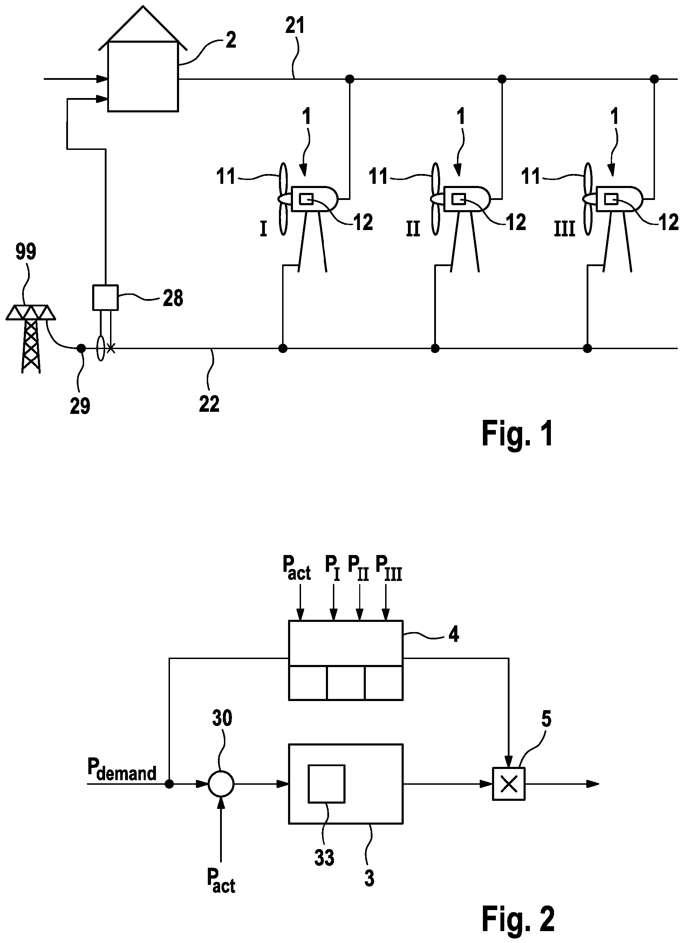

Ein Ausführungsbeispiel für einen erfindungsgemäßen Windpark ist in Fig. 1 dargestellt. Er umfasst einen Parkmaster 2 und mehrere Windenergieanlagen 1, die zur Unterscheidung weiter mit den Ziffern I, II und III gekennzeichnet sind. Die Windenergieanlagen 1 weisen jeweils einen Windrotor 11 mit einem davon angetriebenen Generator 12 zu Erzeugung elektrischer Leistung auf, die in ein Sammelnetz 22 des Parks eingespeist wird und an einem Anschlusspunkt 29 in ein Übertragungsnetz 99 abgegeben wird.

Der Parkmaster 2 überwacht und steuert den Betrieb der Windenergieanlagen 1. Dazu umfasst er einen Leistungsregler 3. Als Eingangssignale sind ein Leistungssollwert Pdemand, der vorzugsweise von einer externen übergeordneten Instanz (nicht dargestellt) bereitgestellt ist, und ein Wert für die aktuelle Leistungseinspeisung Pact angelegt, der von einem Leistungsmessmodul 28 bestimmt ist, welches Spannung und Strom am Anschlusspunkt 28 überwacht. Die von einem Differenzglied 30 ermittelte Differenz wird als ein Signal für die Regeldifferenz an den Leistungsregler 3 angelegt. Der Leistungsregler 3 ermittelt daraus Vorgabewerte für die Windenergieanlagen 1. Er weist dazu ein I-Glied 33 auf, das in dem dargestellten Ausführungsbeispiel ausgeführt ist als ein diskreter Integrator mit einem Summierglied 34 und einem rückgekoppelten Verzögerungsglied (1/z) 35.

Die am Eingang des Leistungsreglers 3 gebildete Regeldifferenz wird nicht direkt dem I-Glied zugeführt, sondern wird mittels eines schaltbaren Parametersatzes 6 vorverarbeitet. Dazu ist ein Vorzeichendetektor 40 vorgesehen, der die von dem Differenzglied 30 gebildete Regeldifferenz darauf untersucht, ob sie positiv oder negativ ist. Ist das Vorzeichen positiv, wird der Parametersatz 61 ausgewählt und die Regeldifferenz mit den zu diesen Parametersatz gehörenden Parametern verarbeitet. In dem dargestellten Ausführungsbeispiel handelt es sich um nur einen Parameter, und zwar den für ein P-Glied 62. Ist das Vorzeichen negativ, wird der Parametersatz 61' ausgewählt und die Regeldifferenz mit den zu diesem Parametersatz gehörenden Parametern verarbeitet, und zwar in dem dargestellten Beispiel mittels des P-Glieds 62'. Die so erzeugten Werte werden mittels eines von dem Vorzeichendetektor 60 angesteuerten Fusionsglieds 63 zusammengeführt und dem I-Glied 33 zugeführt. Die Werte der Parametersätze sind so gewählt, dass der Parametersatz 61' für das negative Vorzeichen (also eine Änderung nach unten) eine kürzere Zeitkonstante als der Parametersatz 61 für das positive Vorzeichen, und zwar vorzugsweise um den Faktor 10 (entsprechen einer Größenordnung).

Weiter weist der Parkmaster 2 erfindungsgemäß ein Vorsteuerungsmodul 4 auf. Es ist parallel zu dem Leistungsregler 3 geschaltet und an seinen Eingang ist das Signal für den Leistungssollwert Pdemand angelegt, sowie Werte für die tatsächlich vom Park abgegebene Leistung Pact und die Leistungen der einzelnen Windenergieanlagen 1. Der von dem Vorsteuerungsmodul 4 bestimmte Ausgangswert wird über ein Multiplikationsglied 5 auf das Ausgangssignal des Leistungsreglers 3 aufgeschaltet, und das daraus erhaltende Produkt in der Folge über ein parkinternes Signalnetz 21 an die Windenergieanlagen 1 übermittelt.

Das Vorsteuerungsmodul 4 und sein Zusammenwirken mit dem Leistungsregler 3 werden nachfolgend näher erläutert. Das Signal für den Leistungssollwert Pdemand wird als Eingangssignal an das Vorsteuerungsmodul 4 und an das Differenzglied 30 am Eingang des Leistungsreglers 3 angelegt. An das Differenzglied 30 ist ferner noch die von dem Leistungsmessmodul 28 ermittelte tatsächliche aktuelle Leistung Pact angelegt.

Das Vorsteuermodul 4 umfasst einen schnellen Vorwärtskanal 40, über den das an seinem Eingang angelegte Signal für die Sollleistung Pdemand unmittelbar ausgegeben und an das Multiplikationsglied 5 angelegt wird. Damit wird eine gewünschte schnelle Reaktion auf Sollwertänderungen erreicht, die dank multiplikativer Aufschaltung automatisch mit dem tatsächlich abgegebenen Leistungsniveau skaliert. Es wird somit ein schnelles und robustes Ansprechen erreicht.

Zur Verfeinerung weist das Vorsteuermodul 4 noch zusätzliche Kanäle 41 und 42 auf, mit denen sie auf den Leistungsregler einwirkt. Der Kanal 41 wirkt auf einen Korrekturbegrenzer 7 und erhält Werte für die von den einzelnen Windenergieanlagen 1 abgegebene Leistung P_{I}, P_{II} und P_{III}. Diese Werte werden von dem Parkmaster 2 über das Signalnetz 21 von den einzelnen Windenergieanlagen 1 abgefragt. Diese Werte sind angelegt an einen Maximumsdetektor 73, der den höchsten dieser Leistungswerte ermittelt und als ein normiertes Leistungssignal an ein Summierglied 74 ausgibt. An das Summierglied 74 ist ferner noch angelegt ein Signal für einen Grundwert Offset. Das daraus gebildete Summensignal wird angelegt an ein Begrenzungsglied 75, welches eine Begrenzung auf 1 entsprechend der Nennleistung durchführt. Diese so erhaltene Signal ist angelegt an ein Divisionsglied 76, das eine Division durch den ebenfall normierten Wert für die Sollleistung Pdemand durchführt. Das somit erhaltene Signal wird einem zweiten Begrenzungsglied 77 zugeführt, das es nach unten hin auf 1 beschränkt und dann an einen Obergrenzen-Eingang 72 des Korrekturbegrenzers 7 angelegt. An einen Untergrenzen-Eingang 71 ist in dem dargestellten Ausführungsbeispiel ein fester normierter Leistungswert von 0,5 angelegt, der optional aber auch auf durch einen höheren Wert ersetzt sein kann.

Der Kanal 42 wirkt auf einen Initialisierer 9, der als Teil der Vorsteuerung 4 dazu ausgebildet ist, dem Leistungsregler 3 in bestimmten Situationen mittels eine Rampenfunktion zu initialiseren. Zum Erkennen dieser bestimmten Situationen weist der Initialisierer 9 eine Eingangsstufe auf, die aus zwei Vergleichsmodulen 93, 94 besteht. An das erste Vergleichsmodul 93 sind Signale für die Sollleistung P demand und die aktuelle Leistung P act angelegt. Es prüft, ob die angeforderte Sollleistung kleiner ist als die aktuell vom Windpark abgegebene Leistung. Ist das der Fall, wird ein Logiksignal als Freigabe ausgegeben. An das zweite Vergleichsmodul 94 ist ebenfalls das Signal für aktuelle Leistung P act angelegt und ferner ein Differenzsignal, welches als ein Ausgangssignal des Korrekturbegrenzers 7 mit einem Ratentoleranzwert T vergleichenden Differenzglied 95 erzeugt wird. Ist die aktuelle Leistung kleiner, wird ebenfalls ein Freigabe-Logiksignal ausgegeben; ist sie es nicht, bedeutet dies dass die aktuelle Leistung dicht genug am neuen Sollwert liegt, dass er direkt erreicht werden kann und eine Initialisierung der Rampe nicht erforderlich ist. Falls beide Freigabesignale vorliegen schaltet ein Logikblock 96 beim Anlegen eines Aktivierungssignals 97 durch. Es wird dann der Ausgang des Initialisierers 9 auf den Wert der aktuell abgegebenen Leistung P act gesetzt. Somit wird erzwungen, dass die Rampenfunktion für den Sollwert P demand unmittelbar bei dem Wert für die aktuelle Leistung P act beginnt, so dass ein spontanes Ansprechen erreicht wird.

Ferner kann an den Initialisierer 9 ein Prädiktor 98 angeschlossen sein. Dieser ist dazu ausgebildet, bei einem Sollwertsprung nach oben einen Schätzwert für die Sollleistungsvorgabe für die Windenergieanlagen zu generieren. Indem bei einem solchen Sollwertsprung auf diesen Schätzwert initialisiert wird, kann ein besseres Übergangsverhalten erreicht werden. Der Prädiktor 98 ist Gegenstand einer anderen, gleichzeitig eingereichten Anmeldung der Anmelderin.

Um bei sehr schnellen Änderungen durch das Vorsteuermodul 4 einen negativen Einfluss auf den Leistungsregler 3 zu vermeiden, ist ein Dynamiksperrglied 8 vorgesehen. An ihm ist das von dem Multiplikationsglied 5 erzeugte Signal angeschlossen. Er überwacht es mittels eines vereinfachten mathematischen Modells 82 der Windenergieanlage 1 und wirkt bei zu schnellen Änderungen auf Sperrelemente 81 ein, die auf die Parametersätze 61, 61' wirken. Damit wird ein sog. Anti-Windup für den Leistungsregler 3 realisiert. Um das gewünschte schnelle Ansprechverhalten dennoch zu sichern, ist das Modell 82 vorzugsweise so aufgebaut, dass es nach einem Integrator 83 als Eingangsstufe einen oberen Pfad 84 mit einem Verzögerungsglied 1. Ordnung 86 sowie einem Begrenzer 88 und einen unteren Pfad 85 umfasst, die zusammengeführt sind an einem Differenzblock 89, der wiederum das Ausgangssignal für die Aktivierung der Sperrelemente 81 ausgibt. Bei einer Leistungserhöhung sorgt so das Verzögerungsglied 86 dafür, dass die an der tatsächlichen Windenergieanlage auftretenden langsamen Prozesse, wie Pitchverstellung der Rotorblätter, im Modell berücksichtigt werden. Damit wird eine korrekte Reglerführung auch für diesen Fall erreicht.

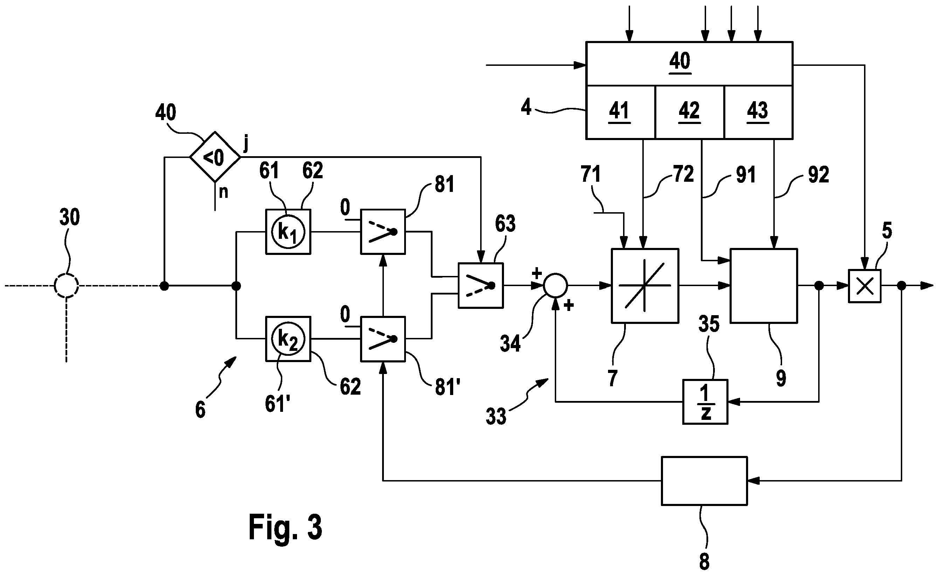

Das Zusammenwirken der vorstehend beschriebenen Komponenten ist in Fig. 3 dargestellt. Es zeigt den Leistungsregler 5 mit dem Differenzglied 30 zur Bildung der Regeldifferenz am Anfang, von wo aus das Signal über die wählbaren Parametersätze 61, 61' dem I-Glied 33 mit dem Summierglied 34 und dem Verzögerungsglied 35 zugeführt wird, und zwar unter Einbeziehung des Initialisierers 9 und des Korrekturbegrenzers 7, die beide von Kanälen des Vorsteuermodul 4 angesteuert sind. Ferner wirkt das Vorsteuermodul 4 mit seinem Kanal 41 unmittelbar auf das Multiplikationsglied 5. An dessen Ausgang ist auch das Dynamiksperrglied 8 angeschlossen, das auf das Parameterwahlmodul 6 zurückwirkt.

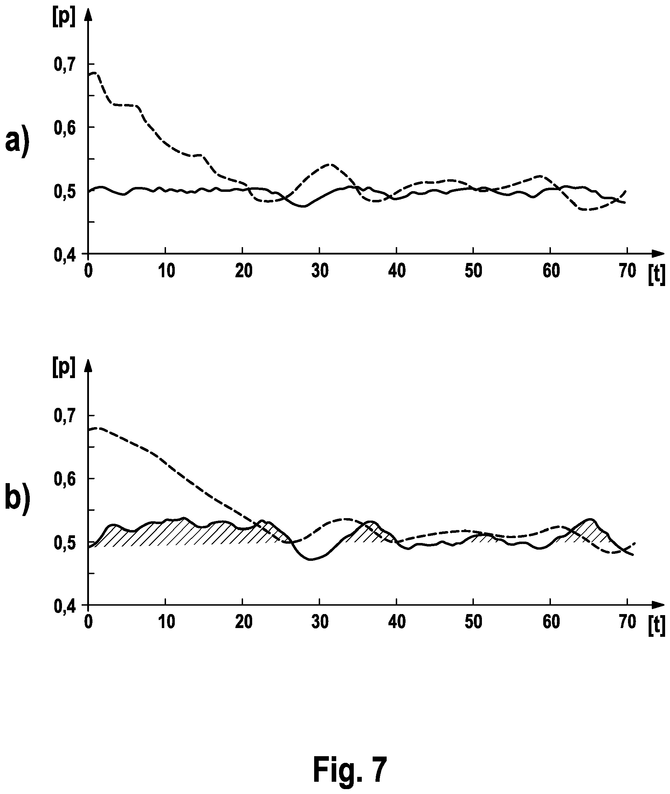

In Fig. 7 sind Leistungsdiagramme für Windparks mit (Fig. 7a) und ohne (Fig. 7b) dem erfindungsgemäßen Vorsteuermodul 4 dargestellt. Die Windbedingungen sind eher schwach aber recht turbulent, so dass die Windenergieanlage schwankend um etwa 70 % ihrer Nennleistung erzeugen. Zum Zeitpunkt t = 0 wird die abgegebene Leistung des Windparks limitiert, indem der Sollwert für die Leistung von vorher unlimitiert auf 0,5 (entspricht halber Nennleistung) herabgesetzt wird.

Die gestrichelte Linie zeigt den vom Parkmaster 2 an die Windenergieanlagen 1 ausgegebenen Sollwert für die Leistung als gestrichelte Linie, und die durchgezogene Linie zeigt die tatsächliche Abgabeleistung des Parks insgesamt. Man erkennt, dass in Fig. 7a der an die Windenergieanlagen übermittelte Sollwert initial schneller abfällt als ohne die Erfindung, wie in Fig. 7b dargestellt. Noch deutlicher wird die durch die Erfindung erreichte Verbesserung bei der Betrachtung des eigentlichen Resultats, nämlich der von dem Windpark tatsächlich abgegebenen Leistung (durchgezogene Linie). Sie steigt ohne die Erfindung (s. Fig. 7 b)im Verlauf der ersten 25 Sekunden an auf Werte über 0,5, obwohl der an den Park angelegte Sollwert eine Verringerung auf 0,5 verlangt. Dieser unerwünschte Anstieg ist durch Schraffur kenntlich gemacht. Im Vergleich dazu wird deutlich, dass mit der Erfindung (Fig. 7a) ein solches unerwünschtes Verhalten ausbleibt, die tatsächlich abgegebene Leistung liegt nahezu konstant auf dem gewünschten Wert und weicht erst zu einem späteren Zeitpunkt geringfügig ab.

## Patentansprüche

1. Windpark mit mindestens zwei Windenergieanlagen (1), die mittels eines Windrotors (11) und eines Generators (12) elektrische Leistung erzeugen und an ein Sammelnetz (22) abgeben, und einem Parkmaster (2), der zur Führung der Windenergieanlagen (1) ausgebildet ist, wobei der Parkmaster (2) einen Leistungsregler (3) umfasst, an dessen Eingang ein Sollleistungssignal angelegt ist und an dessen Ausgang Leistungssteuersignale für die Windenergieanlagen (1) ausgegeben werden,
**dadurch gekennzeichnet, dass**
der Leistungsregler (3) ein Vorsteuermodul (4) aufweist, das ein Maß für die Sollleistung über ein Multiplikationsglied (5) auf den Ausgang des Leistungsreglers (3) aufschaltet.

2. Windpark nach Anspruch 1, **dadurch gekennzeichnet, dass** das Vorsteuerungsmodul ein stationär genaues Glied, insbesondere ein I-Glied (33), umfasst.

3. Windpark nach Anspruch 1 oder 2, **dadurch gekennzeichnet, dass** der Leistungsregler (3) über mindestens einen Parameter parametriert ist und einen doppelten Parametersatz aufweist.

4. Windpark nach Anspruch 3, **dadurch gekennzeichnet, dass** ein Vorzeichendetektor (40) vorgesehen ist und so ausgebildet ist, dass je nach dem Vorzeichen einer Regelungsdifferenz einer der beiden Parametersätze ausgewählt ist.

5. Windpark nach Anspruch 4, **dadurch gekennzeichnet, dass** der Parametersatz für ein Vorzeichen entsprechend einer Änderung nach unten ausgewählt ist und eine kürzere Zeitkonstante aufweist als der Parametersatz für ein Vorzeichen entsprechend einer Änderung nach oben, und zwar vorzugsweise um eine Größenordnung.

6. Windpark nach einem der vorangehenden Ansprüche, **dadurch gekennzeichnet, dass** das Vorsteuermodul (4) einen Korrekturbegrenzer (7) aufweist, der vorzugsweise asymmetrisch ausgebildet ist.

7. Windpark nach Anspruch 6, **dadurch gekennzeichnet, dass** der Korrekturbegrenzer (7) mit einer festen unteren Grenze und einer variablen oberen Grenze versehen ist.

8. Windpark nach Anspruch 7, **dadurch gekennzeichnet, dass** ein Maximumsfinder (73(vorgesehen ist, der die Windenergieanlage (1) mit maximaler Leistungsabgabe ermittelt und deren Leistungsgrad bestimmt, der zur Veränderung der oberen Grenze an den Korrekturbegrenzer (7) angelegt ist.

9. Windpark nach einem der vorangehenden Ansprüche, **dadurch gekennzeichnet, dass** an einem Ausgang des Multiplikationsglieds (5) ein Dynamiksperrglied (8) angeschlossen ist, welches eine Änderungsrate des Ausgangs überwacht und bei Überschreiten eines Grenzwerts der Leistungsregler blockiert.

10. Windpark nach Anspruch 9, **dadurch gekennzeichnet, dass** das Vorsteuermodul (4) so ausgebildet ist, dass es im blockierten Zustand den vorherigen Wert beibehält.

11. Windpark nach Anspruch 9 oder 10, **dadurch gekennzeichnet, dass** im Dynamiksperrglied (8) ein vorzugsweise vereinfachtes Modell (82) der Windenergieanlage implementiert ist.

12. Windpark nach Anspruch 11, **dadurch gekennzeichnet, dass** das Modell (82) bimodal mit unterschiedlichen Zeitkonstanten für Leistungsreduktion und Leistungserhöhung ist.

13. Windpark nach Anspruch 12, **dadurch gekennzeichnet, dass** für Leistungserhöhung das Modell ein Verzögerungsglied (86), vorzugsweise 1. Ordnung, umfasst.

14. Verfahren zum Betreiben eines Windpark mit mindestens zwei Windenergieanlagen (1), die mittels eines Windrotors (11) und eines Generators (12) elektrische Leistung erzeugen und an ein Sammelnetz (22) abgeben, und einem Parkmaster (2), der zur Führung der Windenergieanlagen (1) ausgebildet ist, wobei der Parkmaster (2) einen Leistungsregler (3) umfasst, an dessen Eingang ein Sollleistungssignal angelegt ist und an dessen Ausgang Leistungssteuersignale für die Windenergieanlagen (1) ausgegeben werden,
**gekennzeichnet durch**
Vornehmen einer Vorsteuerung am Leistungsregler (3), wobei ein Maß für die Sollleistung generiert wird, Multiplizieren dieses Maßes mit dem am Ausgang des Leistungsreglers (3) ausgegebenen Signal, und Übermitteln des Ergebnisses der Multiplikation an die Windenergieanlagen (1).

15. Verfahren nach Anspruch 14, **dadurch gekennzeichnet, dass** der Parkmaster (2) nach einem der Ansprüche 2 bis 13 weitergebildet ist.

## Claims

1. Wind farm including at least two wind turbines (1) which generate electric power by means of a wind rotor (11) and a generator (12) and output it to a busbar grid (22), and a farm master (2) which is designed for guiding the wind turbines (1), wherein the farm master (2) includes a power regulator (3), at the input of which a setpoint power signal is applied, and at the output of which power control signals for the wind turbines (1) are output,
**characterized in that**
the power regulator (3) has a feed-forward control module (4) which applies a measure of the setpoint power to the output of the power regulator (3) via a multiplication element (5).

2. Wind farm according to Claim 1, **characterized in that** the feed-forward control module includes a stationarily exact element, in particular an I-element (33) .

3. Wind farm according to Claim 1 or 2, **characterized in that** the power regulator (3) is parameterized via at least one parameter and has a double parameter set.

4. Wind farm according to Claim 3, **characterized in that** a sign detector (40) is provided and is designed in such a way that one of the two parameter sets is selected, depending on the sign of a control difference.

5. Wind farm according to Claim 4, **characterized in that** the parameter set for a sign corresponding to a downward change is selected and has a shorter time constant than the parameter set for a sign corresponding to an upward change, preferably by an order of magnitude.

6. Wind farm according to one of the preceding claims, **characterized in that** the feed-forward control module (4) has a correction limiter (7) which is preferably designed asymmetrically.

7. Wind farm according to Claim 6, **characterized in that** the correction limiter (7) is provided with a fixed lower limit and a variable upper limit.

8. Wind farm according to Claim 7, **characterized in that** a maximum finder (73) is provided which ascertains the wind turbine (1) having maximum power output and determines its power level, which is applied for changing the upper limit at the correction limiter (7).

9. Wind farm according to one of the preceding claims, **characterized in that** a dynamic blocking element (8) is connected at an output of the multiplication element (5), which monitors a rate of change of the output and blocks the power regulator if a limit value is exceeded.

10. Wind farm according to Claim 9, **characterized in that** the feed-forward control module (4) is designed in such a way that it retains the previous value in the blocked state.

11. Wind farm according to Claim 9 or 10, **characterized in that** a preferably simplified model (82) of the wind turbine is implemented in the dynamic blocking element (8) .

12. Wind farm according to Claim 11, **characterized in that** the model (82) is bimodal, having different time constants for reducing power and increasing power.

13. Wind farm according to Claim 12, **characterized in that** for increasing power, the model includes a delay element (86), preferably of the first order.

14. Method for operating a wind farm including at least two wind turbines (1) which generate electric power by means of a wind rotor (11) and a generator (12) and output it to a busbar grid (22), and a farm master (2) which is designed for guiding the wind turbines (1), wherein the farm master (2) includes a power regulator (3), at the input of which a setpoint power signal is applied, and at the output of which power control signals for the wind turbines (1) are output,
**characterized by**
carrying out feed-forward control at the power regulator (3), wherein a measure of the setpoint power is generated, multiplying this measure by the signal output at the output of the power regulator (3), and transmitting the result of the multiplication to the wind turbines (1).

15. Method according to Claim 14, **characterized in that** the farm master (2) is refined according to one of Claims 2 to 13.

## Revendications

1. Parc éolien avec au moins deux éoliennes (1), qui produisent de la puissance électrique au moyen d'un rotor éolien (11) et d'un générateur (12) et la cèdent à un réseau collecteur (22), et avec un gestionnaire de parc (2), qui est conçu pour conduire les éoliennes (1), dans lequel le gestionnaire de parc (2) comprend un régulateur de puissance (3), à l'entrée duquel un signal de puissance de consigne est appliqué et à la sortie duquel des signaux de commande de puissance pour les éoliennes (1) sont émis, **caractérisé en ce que** le régulateur de puissance (3) présente un module de précommande (4), qui connecte une mesure pour la puissance de consigne par l'intermédiaire d'un organe de multiplication (5) à la sortie du régulateur de puissance (3).

2. Parc éolien selon la revendication 1, **caractérisé en ce que** le module de précommande comprend un organe stationnaire exact, en particulier un organe I (33).

3. Parc éolien selon la revendication 1 ou 2, **caractérisé en ce que** le régulateur de puissance (3) est paramétré au moyen d'au moins un paramètre et présente un double jeu de paramètres.

4. Parc éolien selon la revendication 3, **caractérisé en ce qu'**il est prévu un détecteur de signe (40) qui est configuré de telle manière qu'un des deux jeux de paramètres soit respectivement choisi selon le signe d'une différence de régulation.

5. Parc éolien selon la revendication 4, **caractérisé en ce que** le jeu de paramètres pour un signe est choisi d'une façon correspondant à une variation vers le bas et présente une constante de temps plus courte que le jeu de paramètres pour un signe correspondant à une variation vers le haut, notamment de préférence d'un ordre de grandeur.

6. Parc éolien selon l'une quelconque des revendications précédentes, **caractérisé en ce que** le module de précommande (4) présente un limiteur de correction (7), qui est de préférence de forme asymétrique.

7. Parc éolien selon la revendication 6, **caractérisé en ce que** le limiteur de correction (7) est doté d'une limite inférieure fixe et d'une limite supérieure variable.

8. Parc éolien selon la revendication 7, **caractérisé en ce qu'**il est prévu un détecteur de maximum (73), qui détecte l'éolienne (1) produisant la puissance maximale et détermine son rendement, qui est appliqué au limiteur de correction (7) pour la variation de la limite supérieure.

9. Parc éolien selon l'une quelconque des revendications précédentes, **caractérisé en ce qu'**un organe d'arrêt dynamique (8) est raccordé à une sortie de l'organe de multiplication (5), et surveille un taux de variation de la sortie et bloque le régulateur de puissance en cas de dépassement d'une valeur limite.

10. Parc éolien selon la revendication 9, **caractérisé en ce que** le module de précommande (4) est configuré de telle manière qu'à l'état bloqué il conserve la valeur précédente.

11. Parc éolien selon la revendication 9 ou 10, **caractérisé en ce qu'**un modèle de préférence simplifié (82) de l'éolienne est mis en oeuvre dans l'organe d'arrêt dynamique (8).

12. Parc éolien selon la revendication 11, **caractérisé en ce que** le modèle (82) est bimodal avec des constantes de temps différentes pour une diminution de puissance et une augmentation de puissance.

13. Parc éolien selon la revendication 12, **caractérisé en ce que** pour une augmentation de puissance le modèle comprend un organe de décélération (86), de préférence du premier ordre.

14. Procédé de conduite d'un parc éolien avec au moins deux éoliennes (1), qui produisent de la puissance électrique au moyen d'un rotor éolien (11) et d'un générateur (12) et la cèdent à un réseau collecteur (22), et avec un gestionnaire de parc (2), qui est conçu pour conduire les éoliennes (1), dans lequel le gestionnaire de parc (2) comprend un régulateur de puissance (3), à l'entrée duquel un signal de puissance de consigne est appliqué et à la sortie duquel des signaux de commande de puissance pour les éoliennes (1) sont émis, **caractérisé par** l'exécution d'une précommande au régulateur de puissance (3), dans lequel on génère une mesure pour la puissance de consigne, la multiplication de cette mesure avec le signal émis à la sortie du régulateur de puissance (3), et la transmission du résultat de la multiplication aux éoliennes (1).

15. Procédé selon la revendication 14, **caractérisé en ce que** le gestionnaire de parc (2) est reproduit selon l'une quelconque des revendications 2 à 13.
